# EUROPÄISCHE PATENTSCHRIFT

(11) **EP 0 884 561 B1**
(45) Veröffentlichungstag und Bekanntmachung des Hinweises auf die Patenterteilung: **11.09.2002**
(21) Anmeldenummer: 98109484.0
(22) Anmeldetag: 26.05.1998
(51) Int. Cl.: G01C 21/16, F16L 55/38

(54) **Molch zur Lagebestimmung von Rohrleitungen**
Pipeline position determining pig
Dispositif pour déterminer la position d'une pipeline

(30) Priorität: 12.06.1997 DE 19724838
(43) Veröffentlichungstag der Anmeldung: 16.12.1998
(73) Patentinhaber: PII Pipetronix GmbH, 76297 Stutensee (DE)
(72) Erfinder: Goedecke, Hartmut, 35781 Weilburg (DE)
(74) Vertreter: Dipl.-Ing. Heiner Lichti, Dr. rer. nat. Dipl.-Phys. Jost Lempert, Dipl.-Ing. Hartmut Lasch

(56) Entgegenhaltungen:
- EP-A- 0 272 073

## Beschreibung

Die Erfindung betrifft einen Molch zur Lagebestimmung von Rohrleitungen mit zumindest einem Molchkörper und mit an dessen Außenumfang vorgesehenen Tragelementen zur Führung in der Rohrleitung, wobei im Molchkörper eine Gyroskopoder Kreisel-Plattform sowie Versorgungs- und Verarbeitungseinrichtungen für Meßergebnisse angeordnet sind.

Derartige als Gyroskop-Molche bezeichnete Vermessungsmolche dienen beispielsweise zur Trassenvermessung von alten existierenden Rohrleitungen, bei denen der exakte Leitungsverlauf in der Landschaft nicht bekannt ist. Hierbei werden die vom Molch gesammelten Daten bei der Auswertung in ein bekanntes Koordinatensystem übersetzt, so daß für jeden Punkt entlang der Rohrleitungs- oder Pipelinetrasse die genauen Ortskoordinaten bekannt sind. Wahlweise kann diese Information auch für die Einzeichnung des Trassenverlaufes in eine genaue Karte benutzt werden. Des weiteren dienen derartige Molche zum Auffinden von Fehlerstellen in Rohleitungen, wobei sie dann zusätzlich mit sogenannten intelligenten Molchen zumindest zusammenwirken.

Zum Auffinden der Fehlerstellen werden dann die durch die Messungen vom Gyroskopmolch gelieferten Daten benutzt, um beispielsweise in einem sogenannten GPS-System schnell und einfach die richtige Fehlerstelle entlang der Rohrleitungs- oder Pipelinetrasse zu lokalisieren.

Ein weiteres Anwendungsgebiet ist die Bestimmung von lokalen Lageveränderungen, da sich beispielsweise in Gegenden mit instabilem Gelände, wie z.B. Steilhängen, Grubensenkungsgebieten, Gebieten mit Treibsand oder Permafrostboden die Lage der Rohrleitung durch Erdbewegungen verändern kann, wodurch dann starke Spannungen im Rohr entstehen, die im Extremfall zur Faltenbildung oder sogar zum Bruch der Rohrleitung führen können. Bei der Vermessung derartiger Rohrleitungen in regelmäßigen Abständen mit einem Gyroskopmolch können diese Lageveränderungen größenmäßig erfaßt werden, um so die in der Rohrleitung aufgebauten Spannungen zu errechnen. Bei Erreichen bestimmter Spannungswerte können dann Gegenmaßnahmen eingeleitet werden, bevor es zu ernsthafteren Schädigungen kommt.

Um diese Vermessungen durchführen zu können, weist der Molch grundsätzlich einen druckfesten Körper zur Aufnahme der Elektronik und Meßtechnik sowie Tragelemente zum Führen an der Innenwandung der zu vermessenden Rohrleitung auf. Des weiteren ist eine Gyroskop- oder Kreisel-Plattform im Druckkörper gemeinsam mit der Datenaufbereitungselektronik und dem Massenspeicher montiert. Zur Wegmessung weist ein solcher Molch mehrere Odometersysteme auf, und mittels eines Markersystems werden Fixpunkte entlang der Rohrleitung gesetzt. Nach dem Lauf durch die Rohrleitung werden dann die Daten dem Molch entnommen und mit besonderen Software-Programmen ausgewertet. Damit nun die Daten aussagefähig sind, muß die Kreisel-Plattform in gleichmäßiger Lage parallel zur Rohrachse bzw. Rohrwandung geführt werden. In der Praxis heißt dies, daß die genaue Lage der Molchkörperachse zur Rohrachse bekannt sein muß. Diese Lage darf sich zur Verfälschung der Meßergebnisse nicht verändern. Normalerweise werden die Molchkörper mittels Manschetten oder Rollen als Tragelementen in der Leitung geführt. Da der Leitungsdurchmesser jedoch nicht immer konstant ist, müssen diese Trag- und Führungselemente derart flexibel ausgelegt sein, daß sie die Durchmesserveränderungen ausgleichen können. Bei Manschetten wird dieses durch die gummiartige Flexibilität des Materials erreicht, handelt es sich um eine Rollenführung, so sind die Rollen an federbelasteten, einknickbaren Armen aufgehängt. Aufgrund der von hinten angreifenden Vortriebskraft beim Lauf des Molches durch die Rohrleitung neigt der Molch so aber zu einem sogenannten dynamischen Nicken, wodurch der Winkel zwischen Molchachse und Rohrachse während der Fahrt bzw. des Laufes nicht mehr konstant bleibt. Handelt es sich bei den Tragelementen um Molchmanschetten, so ist auch eine Veränderung der Lage des Molchkörpers im Verhältnis zur Rohrachse aufgrund der Abnutzung der Molchmanschetten möglich.

Ein derartiger Molch ist beispielsweise aus EP-A-0 272 073 bekannt.

Aus diesem Grunde wurde bereits ein Molch vorgeschlagen, bei dem eine zusätzliche Anordnung von Ultraschallsensoren ringförmig sowohl vorne als auch hinten am Molchkörper vorgesehen ist, um ständig den jeweiligen Abstand zur Rohrwandung zu messen. Bei der Auswertung der Daten wird dann diese Abstandsinformation genutzt, um die jeweilige Lage des Molchkörpers bzw. dessen Achse zur Rohrachse festzustellen und entsprechende Korrekturen durchzuführen. Durch diesen zusätzlichen technischen Aufwand wird jedoch die Herstellung des Molches stark verteuert, und die notwendige Korrektur bei der Auswertung erhöht auch hier den Zeitaufwand und damit die Kosten.

Der Erfindung liegt daher die Aufgabe zugrunde, einen Molch der eingangs genannten Art zu schaffen, der bei einfacherer und billigerer Herstellung eine genaue Kenntnis der Lage der Molchkörperachse zur Rohrachse ermöglicht.

Erfindungsgemäß wird die genannte Aufgabe durch einen Molch der eingangs genannten Art dadurch gelöst, daß der Molchkörper durch eine Kombination von Tragelementen unter einem definiert konstanten Winkel zur Rohrleitungsachse führbar ist, von denen ein erster Teil in Radialrichtung starr und ein zweiter Teil in Radialrichtung nachgiebig ist. Erfindungsgemäß erfolgt also keine Korrektur der bestimmten Lage des Molchkörpers in der Rohrleitung durch aufwendige Meßsysteme, sondern es ist vielmehr eine Einschränkung der Bewegungsfreiheit des Molchkörpers in Radialrichtung innerhalb der Rohrleitung vorgesehen. Eine Veränderung der Lage der Molchkörperachse zur Rohrachse erfolgt nicht mehr.

Bevorzugt ist der erste Teil aus zwei um 90° am Außenumfang des Molchkörpers versetzt zueinander angeordneten, in Radialrichtung starren Fahr- oder Gleitelementen gebildet, zu denen der zweite Teil aus in Radialrichtung nachgiebigen Fahr- oder Gleitelementen als Trag- und Führungselemente zumindest diametral gegenüberliegend angeordnet ist. Durch den ersten Teil wird die Bewegungsfreiheit eingeschränkt, durch den zweiten Teil können Durchmesserveränderungen aufgrund der nicht immer konstanten Leitungsdurchmesser einfach und zuverlässig ausgeglichen werden.

Damit der Molchkörper immer im gleichen Winkel zur Rohrachse, vorzugsweise sogar mit seiner Achse parallel zur Rohrachse durch die Rohrleitung geführt werden kann, sind die Fahr- oder Gleitelemente am in Axialrichtung vorderen und hinteren Ende des Molchkörpers angeordnet. Der Molchkörper repräsentiert nun mit seiner Ausrichtung immer genau den Richtungsverlauf der Rohrleitung bzw. Pipeline und führt kein dynamisches Eigenleben mehr wie die aus dem Stand der Technik bekannten Molchkörper.

In bevorzugter Ausgestaltung ist vorgesehen, daß die starren Fahr- oder Gleitelemente in Form von Gleitschuhen ausgebildet sind, wobei zu deren Herstellung ein geeigneter Kunststoff verwendet werden kann. Um eine bei der Verwendung von Gleitschuhen mögliche Abnutzung zu vermeiden bzw. zu verringern, damit die Genauigkeit auch bei langen zu durchlaufenden Strecken erhalten bleibt, ist alternativ vorgesehen, daß die in Radialrichtung starren Fahr- oder Gleitelemente durch fest am Molchkörper montierte Rollen gebildet sind.

Als flexible bzw. in Radialrichtung nachgiebige Fahroder Gleitelemente sind bevorzugt Manschettensegmente aus gummielastischem Werkstoff, wie Polyurethan, vorgesehen. In anderer bevorzugter Ausgestaltung kann es sich dabei aber auch um elastisch gelagerte Rollen handeln, die vorzugsweise an federbelasteten, einknickbaren Armen aufgehängt sind.

Da die Rohrwandung der zu vermessenden Rohrleitungen bzw. Pipelines beispielsweise im Bereich von T-Stücken unterbrochen ist, kann bei Verwendung von Rollen oder Gleitschuhen als Tragelementen ein Eintauchen dieser in die Versenkung erfolgen, wodurch eine Beschädigung der als Trag- und Führungselemente dienenden Rollen oder Gleitschuhe nicht auszuschließen ist. Um dies zu verhindern, sind in Weiterbildung den Tragelementen in Fahrtrichtung des Molchkörpers vorgeordnete Scheiben oder konisch ausgebildete Manschetten vorgesehen, deren zylindrische Hüllfläche einen gegenüber dem Innendurchmesser der Rohrleitung geringeren Außendurchmesser aufweist. Diese Nottragelemente berühren also bei normaler Fahrt bzw. normalem Lauf des Molches die Rohrwandung nicht, dienen also nicht als Molchführungselemente, sondern treten lediglich im Bereich von Versenkungen etc. als Schutz für die Rollen oder Gleitschuhe in Erscheinung.

Um die Fortbewegung des Molches in der Rohrleitung zu sichern, sind in Weiterbildung in Fahrtrichtung des Molchkörpers den Nottragelementen nachgeordnete, flexibel ausgebildete Dichtmanschetten vorgesehen, die vorzugsweise in Form von Dichtscheiben ausgebildet sind. Diese sogenannten Segelscheiben dichten derart in der Rohrleitung ab, daß der notwendige Fahr-Differenzdruck aufgebaut werden kann. Aufgrund ihrer flexiblen Ausgestaltung übernehmen sie keine Aufgabe als Tragelement zur Molchführung, so daß hierdurch das Zusammenspiel der starren und flexiblen bzw. nachgiebigen Fahr- oder Gleitelemente nicht gestört wird.

Insgesamt ist so ein Molch zur Lagebestimmung von Rohrleitungen geschaffen, mittels dessen zuverlässig Trassenvermessungen sowie die Bestimmung von lokalen Lageveränderungen von Rohrleitungen erfolgen können. Des weiteren ist es möglich, an den erfindungsgemäßen Molch beispielsweise eine sogenannte Meßspinneneinheit eines Beulenmolches anzuhängen, um so nicht nur den Leitungsverlauf oder lokale Änderungen dieses Verlaufes zu vermessen, sondern um auch Beulen bzw. Unrundheiten an den Rohrleitungen festzustellen.

Weitere Vorteile und Merkmale der Erfindung ergeben sich aus den Ansprüchen und aus der nachfolgenden Beschreibung, in der Ausführungsbeispiele unter Bezugnahme auf die Zeichnung im einzelnen erläutert sind. Dabei zeigt:
- Fig. 1: einen von konischen Manschetten aus elastischem Material umgebenen Molchkörper nach dem Stand der Technik im Längsschnitt;
- Fig. 2: eine erste Ausführungsform eines erfindungsgemäßen Molches im Längsund Querschnitt; und
- Fig. 3: eine zweite Ausführungsform eines erfindungsgemäßen Molches im Längsund Querschnitt.

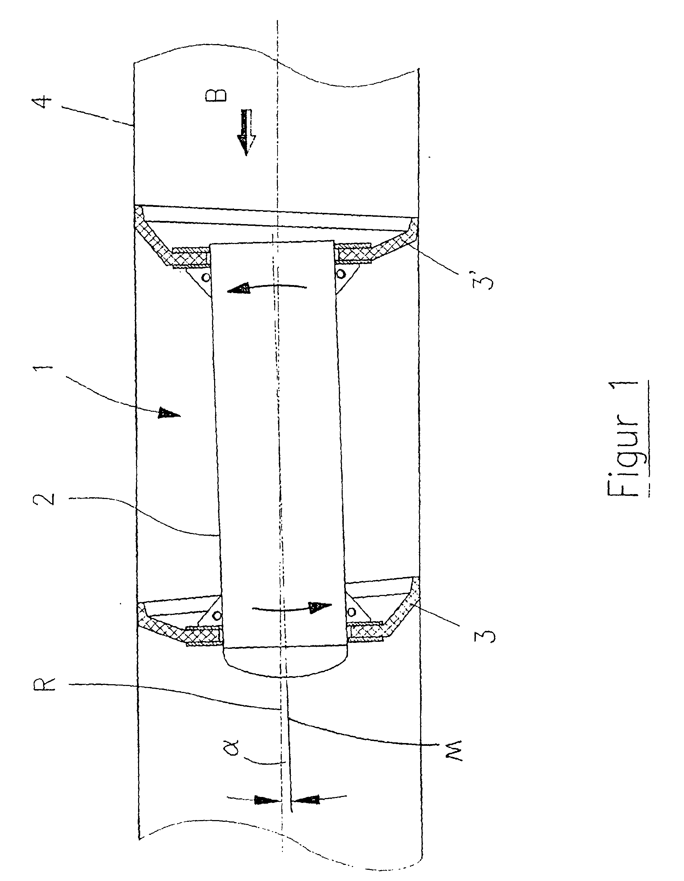

Der in Fig. 1 dargestellte Molch 1 nach dem Stand der Technik weist im dargestellten Ausführungsbeispiel einen Molchkörper 2 mit einem druckfesten Gehäuse auf. Das Gehäuse dieses Molchkörpers 2 ist am vorderen und hinteren axialen Ende des Molchkörpers jeweils von einer konischen Manschette 3, 3' aus flexiblem Material umgeben. Mittels dieser als Trag- und Führungselement dienenden Manschetten 3, 3' wird der Molch 1 durch eine Rohrleitung 4 geführt. Die Manschetten 3, 3' liegen dabei mit ihren freien Enden an der Rohrinnenwandung an. Wie Fig. 1 zu entnehmen ist, neigt der Molch 1 aufgrund der von hinten angreifenden Vortriebskraft, die durch den Pfeil B gekennzeichnet ist, zu einem dynamischen Nicken, wodurch der Winkel . zwischen der Molchachse M und der Rohrachse R nicht mehr konstant bleibt.

Da im Inneren des Molchkörpers 2 eine nicht dargestellte Gyroskop- oder Kreisel-Plattform gemeinsam mit einer Datenaufbereitungselektronik und einem Massenspeicher sowie Versorgungseinrichtungen angeordnet und montiert sind, führt das dynamische Nicken des Molches 1 dazu, daß die Gyroskop- oder Kreisel-Plattform die notwendige gleichmäßige Lage parallel zur Rohrachse bzw. zur Rohrwandung nicht mehr aufweist. Entsprechend verlieren die so ermittelte Daten ihre Aussagefähigkeit.

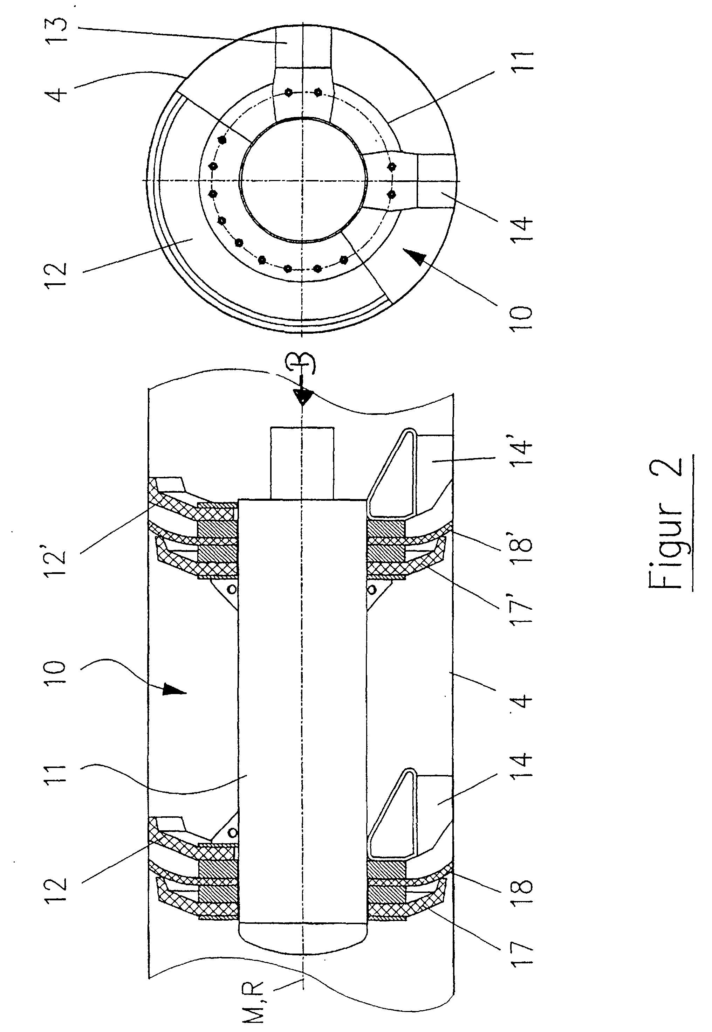

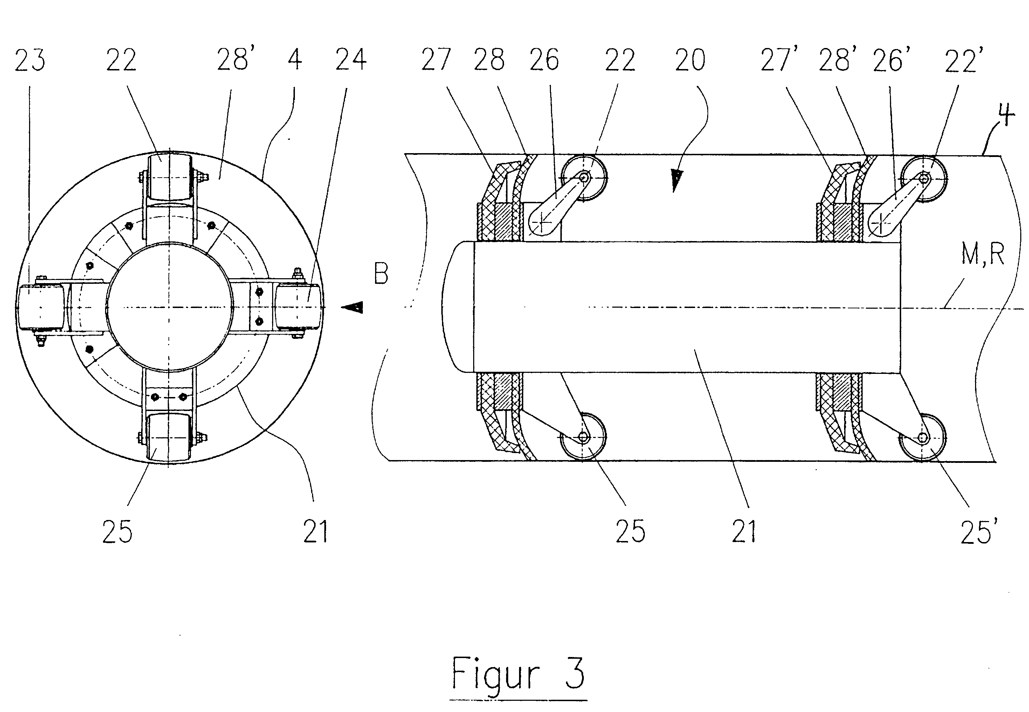

In Fig. 2 und 3 sind erfindungsgemäß ausgebildete Molche 10, 20 dargestellt. Diese Molche 10, 20 weisen wiederum einen Molchkörper 11, 21 mit einem druckfesten Gehäuse auf. Im Druckkörper ist wiederum die Gyroskop- oder Kreisel-Plattform gemeinsam mit der Datenaufbereitungselektronik, dem Massenspeicher und Versorgungseinrichtungen montiert. Des weiteren weisen die Molche 10, 20 ein oder mehrere Odometersysteme zur Wegmessung auf (nicht dargestellt). Ferner ist ein Markersystem zum Setzen von Fixpunkten entlang der Rohrleitung 4 vorgesehen (ebenfalls nicht dargestellt).

Bei der in Fig. 2 dargestellten Ausführungsform weist der Molch 10 an seinem Außenumfang an seinem vorderen und hinteren axialen Ende zum einen jeweils ein sich in Umfangsrichtung über einen Teilbereich des Molchkörpers 11 erstreckendes Manschettensegment 12, 12' aus einem gummielastischen Werkstoff, beispielsweise Polyurethan, auf, die als flexible, in Radialrichtung elastische Gleitelemente dienen. Auf der anderen Umfangshälfte des Molchkörpers 11 sind jeweils zwei Gleitschuhe 13, 14 bzw. 14' angeordnet, die zueinander um 90° versetzt an der Außenseite des Molchkörpers als in Radialrichtung starres Gleitelement festgelegt sind. Diese aus einem geeigneten Kunststoffmaterial oder Ähnlichem bestehenden Gleitschuhe 13, 14 bzw. 14' sind dabei, wie Fig. 2 zu entnehmen ist, dem Manschettensegment 12, 12' im wesentlichen diametral gegenüberliegend am Außenumfang des Molchkörpers 11 angeordnet.

Bei dem in Fig. 3 dargestellten erfindungsgemäßen Molch 20 sind am axial vorderen und hinteren Ende des Molchkörpers 21 an dessen Außenumfang vier Rollen 22, 23, 24, 25 bzw. 22', 25' angeordnet. Diese vier Rollen 22, 23, 24, 25, 22', 25' sind dabei jeweils um 90° zueinander versetzt angeordnet bzw. am Molchkörper 21 festgelegt. Bei den Rollen 24, 25 handelt es sich um fest am Molchkörper montierte Fahrelemente, während die den Rollen 24, 25 diametral gegenüberliegenden Rollen 22, 23, 22' über federbelastete, einknickbare Arme 26, 26', an diesen aufgehängt, am Molchkörper 21 festgelegt sind. Die gemeinsam mit den federbelasteten, einknickbaren Armen 26, 26' als in Radialrichtung nachgiebige Fahrelemente dienenden Rollen 22, 22', 23 dienen dann zum Ausgleich von Durchmesserveränderungen, während die in Radialrichtung starren Rollen 24, 25, 25' die Bewegungsfreiheit des Molches 20 einschränken und so jeweils für eine gleichmäßige Lage der Gyroskop- oder Kreisel-Plattform parallel zur Rohrachse R sorgen. Gleiches gilt für die Gleitschuhe 13, 14, 14' sowie das Manschettensegment 12, 12' in Fig. 2.

Des weiteren sind bei den in Fig. 2 und 3 dargestellten Ausführungsbeispielen in durch den Pfeil B gekennzeichneter Fahrtrichtung des Molchkörpers 11 bzw. 21 den Rollen 22, 23, 24, 25 bzw. 22', 25' bzw. Gleitschuhen 13, 14, 14' jeweils an jedem Ende konische Manschetten 17, 17', 27, 27' vorgeordnet, deren zylindrische Hüllflächen einen gegenüber dem Innendurchmesser der Rohrleitung 4 geringeren Außendurchmesser aufweist. Zwischen diesen Manschetten 17, 17', 27, 27' und den Rollen 22, 23, 24, 25 bzw. 22', 25' oder Gleitschuhen 13, 14, 14' sind ebenfalls letzteren vorgeordnete, flexibel ausgebildete Dichtmanschetten 18, 18', 28, 28' vorgesehen, wobei es sich im dargestellten Ausführungsbeispiel um sogenannte Dichtoder Segelscheiben handelt. Diese dichten, wie Fig. 2 und 3 zeigen, in der Rohrleitung ab und sorgen so für den Aufbau des notwendigen Fahr-Differenzdruckes. Um keinerlei Molchführung zu übernehmen, sind sie sehr flexibel ausgebildet.

Soll nicht nur der Leitungsverlauf oder eine lokale Änderung dieses Verlaufes vermessen werden, so kann an den dargestellten erfindungsgemäßen Molch 10 bzw. 20 jeweils ein entsprechendes Molchmodul zur Werkstoffprüfung angehängt werden, beispielsweise eine Meßspinneneinheit eines Beulenmolches.

## Patentansprüche

1. Molch zur Lagebestimmung von Rohrleitungen mit zumindest einem Molchkörper (11, 21) und mit an dessen Außenumfang vorgesehenen Tragelementen (12, 12', 13, 14, 14', 22, 22', 23, 24, 25, 25', 26, 26') zur Führung in der Rohrleitung, wobei im Molchkörper eine Gyroskopoder Kreisel-Plattform sowie Versorgungs- und Verarbeitungseinrichtungen für Meßergebnisse angeordnet sind, **dadurch gekennzeichnet, daß** der Molchkörper (11, 21) durch eine Kombination von Tragelementen (12, 12', 13, 14, 14', 22, 22', 23, 24, 25, 25', 26, 26') unter einem definiert konstanten Winkel zur Rohrleitungsachse (R) führbar ist, von denen ein erster Teil (13, 14, 14', 24, 25, 25') in Radialrichtung starr und ein zweiter Teil (12, 12', 22, 22', 23, 26, 26') in Radialrichtung nachgiebig ist.

2. Molch nach Anspruch 1, **dadurch gekennzeichnet, daß** der erste der Tragelemente Teil aus zwei um 90° am Außenumfang des Molchkörpers (11, 21) versetzt zueinander angeordneten, in Radialrichtung starren Fahr- oder Gleitelementen (13, 14, 14', 24, 25, 25') gebildet ist, zu denen der zweite Teil aus in Radialrichtung nachgiebigen Fahr- oder Gleitelementen (12, 12,', 22, 22', 23, 26, 26') als Tragelementen zumindest diametral gegenüberliegend angeordnet ist.

3. Molch nach Anspruch 1 oder 2, **dadurch gekennzeichnet, daß** die Fahr- oder Gleitelemente (12, 12', 13, 14, 14', 22, 22', 23, 24, 25, 25', 26, 26') am in Axialrichtung vorderen und hinteren Ende des Molchkörpers (11, 21) angeordnet sind.

4. Molch nach einem der Ansprüche 1 bis 3, **dadurch gekennzeichnet, daß** die in Radialrichtung starren Fahr- oder Gleitelemente in Form von Gleitschuhen (13, 14, 14') ausgebildet sind.

5. Molch nach Anspruch 4, **dadurch gekennzeichnet, daß** die Gleitschuhe (13, 14, 14') aus Kunststoff sind.

6. Molch nach einem der Ansprüche 1 bis 3, **dadurch gekennzeichnet, daß** die in Radialrichtung starren Fahr- oder Gleitelemente durch fest am Molchkörper (21) montierte Rollen (24, 25, 25') gebildet sind.

7. Molch nach einem der Ansprüche 1 bis 6, **dadurch gekennzeichnet, daß** die in Radialrichtung nachgiebigen Fahr- oder Gleitelemente durch Manschettensegmente (12, 12') aus gummielastischem Werkstoff gebildet sind.

8. Molch nach Anspruch 7, **dadurch gekennzeichnet, daß** der Werkstoff Polyurethan ist.

9. Molch nach einem der Ansprüche 1 bis 6, **dadurch gekennzeichnet, daß** die in Radialrichtung nachgiebigen Fahr- oder Gleitelemente durch elastisch gelagerte Rollen (22, 22', 23) gebildet sind.

10. Molch nach einem der Ansprüche 6 bis 9, **gekennzeichnet durch** den Tragelementen (12, 12', 13, 14, 14', 22, 23, 24, 25, 22', 25') in Fahrtrichtung (B) des Molchkörpers (21) vorgeordnete konische Manschetten (17, 17', 27, 27') als Nottragelemente, deren zylindrische Hüllflächen einen gegenüber dem Innendurchmesser der Rohrleitung (4) geringeren Außendurchmesser aufweisen.

11. Molch nach einem der Ansprüche 6 bis 9, **gekennzeichnet durch** den Tragelementen in Fahrtrichtung des Molchkörpers vorgeordnete Scheiben als Nottragelemente, deren zylindrische Hüllflächen einen gegenüber dem Innendurchmesser der Rohrleitung geringeren Außendurchmesser aufweisen.

12. Molch nach einem der Ansprüche 10 oder 11, **gekennzeichnet durch** in Fahrtrichtung (B) des Molchkörpers (21) den Nottragelementen (27, 27', 17, 17') nachgeordnete, flexibel ausgebildete Dichtmanschetten (18, 18', 28, 28').

13. Molch nach Anspruch 12, **dadurch gekennzeichnet, daß** die Dichtmanschetten (18, 18', 28, 28') in Form von Dichtscheiben ausgebildet sind.

## Claims

1. Pig for determining the position of pipelines with at least one pig body (11, 21) and with support elements (12, 12', 13, 14, 14', 22, 22', 23, 24, 25, 25', 26, 26') provided on its outer circumference for guidance in the pipeline, whilst in the pig body are provided a gyroscope platform as well as supply and processing means for the measurement results, **characterized in that** the pig body (11, 21) is guidable by a combination of support elements (12, 12', 13, 14, 14', 22, 22', 23, 24, 25, 25', 26, 26') under a clearly defined constant angle with respect to the pipeline axis (R), whereof a first part (13, 14, 14', 24, 25, 25') is rigid in the radial direction and a second part (12, 12', 22, 22', 23, 26, 26') is elastic in the radial direction.

2. Pig according to claim 1, **characterized in that** the first part of the support elements is formed by two radially rigid travelling or sliding elements (13, 14, 14', 24, 25, 25'), which are mutually displaced on the outer circumference of the pig body (11, 21) and with respect to which the second part of radially elastic travelling or sliding elements (12, 12', 22, 22', 23, 26, 26') as support elements is at least diametrically opposed.

3. Pig according to claim 1 or 2, **characterized in that** the travelling or sliding elements (12, 12', 13, 14, 14', 22, 22', 23, 24, 25, 25', 26, 26') are located on the axially front and rear ends of the pig body (11, 21).

4. , Pig according to one of the claims 1 to 3, **characterized in that** the radially rigid travelling or sliding elements are constructed in the form of sliding blocks (13, 14, 14').

5. Pig according to claim 4, **characterized in that** the sliding blocks (13, 14, 14') are made from plastic.

6. Pig according to one of the claims 1 to 3, **characterized in that** the radially rigid travelling or sliding elements are formed by rolls (24, 25, 25') mounted in fixed manner on the pig body (21).

7. Pig according to one of the claims 1 to 6, **characterized in that** the radially elastic travelling or sliding elements are formed by sleeve segments (12, 12') of rubber-like material.

8. Pig according to claim 7, **characterized in that** the material is polyurethane.

9. Pig according to one of the claims 1 to 6, **characterized in that** the radially elastic travelling or sliding elements are formed by flexibly mounted rolls 22, 22', 23).

10. Pig according to one of the claims 6 to 9, **characterized by** conical sleeves (17, 17', 27, 27') as emergency support elements and which are positioned upstream of the support elements (12, 12', 13, 14, 14', 22, 23, 24, 25, 22', 25') in the travel direction (B) of the pig body (21) and whose cylindrical envelope surfaces have a smaller external diameter than the internal diameter of the pipeline (4).

11. Pig according to one of the claims 6 to 9, **characterized by** disks as emergency support elements positioned upstream of the support elements in the travel direction of the pig body and whose cylindrical envelope surfaces has a smaller external diameter than the internal diameter of the pipeline.

12. Pig according to one of the claims 10 or 11, **characterized by** flexibly constructed sealing sleeves (18, 18', 28, 28') positioned downstream of the emergency support elements (27, 27', 17, 17') in the travel direction (B) of the pig body (21).

13. Pig according to claim 12, **characterized in that** the sealing sleeves (18, 18', 28, 28') are constructed in the form of sealing disks.

## Revendications

1. Sonde pour déterminer la position de pipelines comprenant au moins un corps de sonde (11,21) et des éléments-supports (12,12',13,14,14', 22,22',23,24,25,25',26,26') disposés sur sa périphérie extérieure pour le guidage dans le pipeline, le corps de dispositif comportant une plate-forme gyroscopique ou pivotante ainsi que des dispositifs d'alimentation et de traitement des résultats de mesures, **caractérisée en ce que** le corps de sonde (11,21) peut être guidé selon un angle défini constant par rapport à l'axe (R) du pipeline grâce à une combinaison d'éléments-supports (12,12',13,14,14',22,22',23,24,25,25',26,26') dont une première série (13,14,14',24,25,25') est rigide en direction axiale et une deuxième série (12,12',22,22',23,26,26') est flexible en direction axiale.

2. Sonde selon la revendication 1, **caractérisée en ce que** la première série d'éléments-supports est formée de deux éléments de roulage ou de coulissement (13,14,14',24,25,25') rigides en direction axiale disposés sur la périphérie extérieure du corps de sonde (11,21) décalés de 90° l'un par rapport à l'autre, par rapport auxquels la deuxième série consistant en des éléments de roulage ou de coulissement (12,12',22,22',23,26,26') flexibles en direction radiale est disposée au moins diamétralement opposée sous forme d'éléments-supports.

3. Sonde selon la revendication 1 ou 2, **caractérisée en ce que** les éléments de roulage ou de coulissement (12,12',13,14,14'22,22',23,24,25,25',26, 26') sont disposés à l'extrémité avant et arrière en direction axiale du corps de sonde (11,21).

4. Sonde selon l'une quelconque des revendications 1 à 3, **caractérisée en ce que** les éléments de roulage ou de coulissement rigides en direction axiale sont conformés en patins de guidage (13,14,14').

5. Sonde selon la revendication 4, **caractérisée en ce que** les patins de guidage (13,14,14') sont en matière plastique.

6. Sonde selon l'une quelconque des revendications 1 à 3, **caractérisée en ce que** les éléments de roulage ou de coulissement rigides en direction radiale sont constitués par des roulettes (24,25,25') montées fixes sur le corps de sonde (21).

7. Sonde selon l'une quelconque des revendications 1 à 6, **caractérisée en ce que** les éléments de roulage ou de coulissement flexibles en direction radiale sont constitués par des segments de manchette (12,12') réalisés dans un matériau élastique.

8. Sonde selon la revendication 7, **caractérisée en ce que** le matériau est du polyuréthane.

9. Sonde selon l'une quelconque des revendications 1 à 6, **caractérisée en ce que** les éléments de roulage ou de coulissement flexibles en direction radiale sont constitués par des roulettes (22,22',23) à palier élastique.

10. Sonde selon l'une quelconque des revendications 6 à 9, **caractérisée par** des manchettes coniques (17,17',27,27') disposées devant les éléments-supports (12,12',13,14,14"22,23,24,25,22',25") dans la direction de déplacement (B) du corps de sonde (21) comme éléments-supports de sécurité, dont les surfaces d'enveloppe cylindriques présentent un diamètre extérieur inférieur à celui du diamètre inférieur du pipeline (4).

11. Sonde selon l'une quelconque des revendications 6 à 9, **caractérisée par** des disques disposés devant les éléments-supports dans la direction de déplacement du corps de sonde comme éléments-supports de sécurité, dont les surfaces d'enveloppe cylindriques présentent un diamètre extérieur inférieur à celui du diamètre inférieur du pipeline.

12. Sonde selon l'une des revendications 10 ou 11, **caractérisée par** des manchettes d'étanchéité (18,18',28,28') conformées flexibles et disposées derrière les éléments-supports de sécurité (27,27',17,17') dans la direction de déplacement (B) du corps de sonde (21).

13. Sonde selon la revendication 12, **caractérisée en ce que** les manchettes d'étanchéité (18,18',28,28') sont conformées en disques d'étanchéité.
